# FASCICULE DE BREVET EUROPEEN

(11) **EP 2 410 471 B1**
(45) Date de publication et mention de la délivrance du brevet: **12.10.2016**
(21) Numéro de dépôt: 11173390.3
(22) Date de dépôt: 11.07.2011
(51) Int. Cl.: G06K 19/077

(54) **Etiquette électronique sans contact**
Kontaktloses elektronisches Etikett
Contactless electronic tag

(30) Priorité: 20.07.2010 FR 1055888
(43) Date de publication de la demande: 25.01.2012
(73) Titulaire: Oberthur Technologies, 92300 Levallois-Perret (FR)
(72) Inventeur: Launay, François, 35500 Vitre (FR)
(74) Mandataire: Delumeau, François Guy

(56) Documents cités:
- WO-A1-2006/064200
- FR-A1- 2 890 212
- US-A1- 2009 315 320
- US-B1- 6 371 380

## Description

La présente invention concerne le domaine technique des étiquettes électroniques de type sans contact. Elle s'applique plus précisément mais non exclusivement aux étiquettes électroniques destinées à être rapportées sur une surface métallique d'un objet.

On entend par étiquette électronique, un ensemble comprenant un support, un circuit de communication en champ proche comprenant une puce électronique et une antenne de communication en champ proche, permettant l'établissement d'une communication sans contact avec un dispositif externe pour échanger des données. L'antenne est généralement raccordée à la puce électronique et sert non seulement de moyen de communication sans contact mais également à produire l'énergie nécessaire à l'alimentation de la puce électronique.

Afin d'assurer une transmission optimale des données entre l'étiquette et le dispositif externe quel que soit l'environnement métallique de l'étiquette, l'étiquette est munie d'une couche de blindage magnétique apte à protéger le circuit de communication en champ proche.

Cela présente un intérêt particulier, notamment pour une application de "paiement sans contact", embarquée sur un téléphone mobile, le téléphone mobile comprenant une batterie et parfois même un boîtier métallique pouvant nuire grandement à la qualité de transmission de données avec un lecteur externe lorsque l'étiquette est apposée sur le téléphone.

On connaît déjà dans l'état de la technique, notamment du document WO 2008/065278, une étiquette de type sans contact adaptée pour une application dans un environnement métallique. Dans ce document, l'étiquette comprend une couche intermédiaire réalisée en un matériau hyperconducteur magnétique, placé contre un substrat portant l'antenne et le microcircuit. L'ensemble formé par le substrat, l'antenne et le microcircuit est par la suite noyé dans une enveloppe réalisée dans une matière plastique par lamination ou moulage.

L'inconvénient de l'étiquette ainsi obtenue est qu'elle reste relativement épaisse du fait de la présence, en plus du substrat portant l'antenne et le microcircuit, de la couche intermédiaire et de l'enveloppe. En outre, dans ce document, les dimensions de l'étiquette sont définies par les dimensions de l'antenne qui s'étend sur une surface relativement large.

Il existe à ce jour, un besoin pour une étiquette personnalisable, de faible épaisseur, de faibles dimensions et de faibles coûts de fabrication. En outre, cette étiquette doit être adaptée pour fonctionner dans un environnement métallique tel que par exemple la proximité d'un téléphone mobile.

L'invention a notamment pour but de fournir une étiquette répondant à ce besoin.

A cet effet, l'invention a pour objet un dispositif électronique sans contact comprenant une antenne de communication en champ proche, un microcircuit raccordé à l'antenne et une couche de blindage magnétique agencée pour s'étendre sensiblement en vis-à-vis de l'antenne, caractérisé en ce que l'antenne et le microcircuit sont regroupés dans un module et en ce que le dispositif comprend un corps comprenant une cavité ouverte sur l'une de ses faces dans laquelle sont logés le module et la couche de blindage de manière à ce que la couche de blindage ferme la cavité.

Grâce à l'invention, l'épaisseur de l'étiquette est avantageusement optimisée. En effet, la couche de blindage est logée dans la même cavité que le module et ferme cette cavité. Cette double fonction de la couche de blindage permet d'optimiser l'épaisseur de l'étiquette. En outre, du fait que l'antenne est incorporée dans le module, la longueur et la largeur de l'étiquette peuvent être réduites sensiblement à la surface utile de l'antenne. La fabrication d'une telle étiquette est en plus relativement simple puisqu'il suffit de former une cavité dans une couche support et d'incorporer les différents éléments fonctionnels tels que l'antenne, le microcircuit et la couche de blindage.

Un dispositif selon l'invention peut en outre comporter l'une ou l'autre des caractéristiques selon lesquelles :
- la cavité comprend une région profonde centrale de logement du module et une région périphérique surélevée entourant la région centrale de logement de la couche de blindage ;
- la cavité étant munie d'une paroi périphérique et d'un fond, la paroi comprend un gradin supérieur, séparant la région centrale et la région périphérique, pour former un rebord supérieur d'appui de la couche de blindage ;
- la cavité étant munie d'une paroi périphérique et d'un fond, la paroi comprend, dans la région centrale, un gradin inférieur, séparant une première zone de logement du microcircuit et une deuxième zone de logement d'un support de module portant le microcircuit et l'antenne, pour former un rebord inférieur d'appui du support de module ;
- le module comprend un support portant le microcircuit et l'antenne ;
- lequel le corps comprend un anneau électriquement conducteur entourant sensiblement un contour externe de l'antenne et s'étendant dans un plan parallèle à un plan comprenant l'antenne ou dans un même plan ;
- le dispositif est une étiquette de type sans contact.

L'invention a encore pour objet un support pour une étiquette de type sans contact, comprenant un corps en forme générale de plaque et une plaquette détachable formant l'étiquette, caractérisé en ce que, l'étiquette étant selon l'invention, la cavité s'étend à l'intérieur de la plaquette.

Un support pour étiquette selon l'invention peut en outre comporter les caractéristiques selon lesquelles :
- plaquette détachable est délimitée par une ligne fracturable ménagée dans le support et prévue pour permettre une séparation de la plaquette et du support par simple pression manuelle ;
- la ligne fracturable comprend des incisions traversantes et/ou des incisions non traversantes ;
- le corps comprenant deux plaquettes détachables formant des première et deuxième étiquettes disposées l'une à côté de l'autre et en regard l'une de l'autre.

L'invention a enfin pour objet un procédé de fabrication d'un dispositif électronique comprenant une antenne de communication en champ proche et un microcircuit raccordé à l'antenne et une couche de blindage magnétique s'étendant sensiblement vis-à-vis de l'antenne, caractérisé en ce que l'on forme une cavité dimensionnée pour recevoir le module et la couche de blindage, la cavité comprenant une région centrale profonde de logement du module et une zone périphérique entourant la région centrale profonde de logement de la couche de blindage.

Un procédé selon l'invention peut en outre comporter l'une ou l'autre des caractéristiques selon lesquelles :
- la région centrale comprend une première zone centrale munie d'un fond pour le logement du microcircuit et une deuxième zone périphérique surélevée par rapport à la première zone centrale délimitant un gradin avec le fond pour le logement d'un support du module portant l'antenne et le microcircuit ;
- la cavité comprend trois étages correspondant respectivement à une première région périphérique de logement de la couche de blindage, à une deuxième région intermédiaire de logement d'un support du module portant l'antenne et le microcircuit et à une troisième région centrale de logement du microcircuit.

D'autres caractéristiques et avantages de l'invention apparaîtront à la lumière de la description qui suit, faite en référence aux dessins annexés dans lesquels :
- la figure 1 représente une vue de dessus d'un support pour étiquette de type sans contact selon un premier mode de réalisation de l'invention ;
- la figure 2 représente une vue en coupe selon la ligne 2-2 du support de la figure 1 ;
- la figure 3 représente une vue en coupe selon la ligne 2-2 du dispositif de la figure 1, selon un deuxième mode de réalisation du support de la figure 1 ;
- les figures 4 à 7 illustrent de façon schématiques les différentes étapes de fabrication du dispositif de la figure 1 ;
- la figure 8 représente une vue de dessus d'un support pour étiquette de type sans contact portant deux étiquettes de type sans contact ;
- la figure 9 représente une vue en coupe selon la ligne IX-IX du support de la figure 8 ;
- la figure 10 représente un téléphone mobile portant une étiquette électronique sans contact formant une plaquette détachable du dispositif de la figure 1.

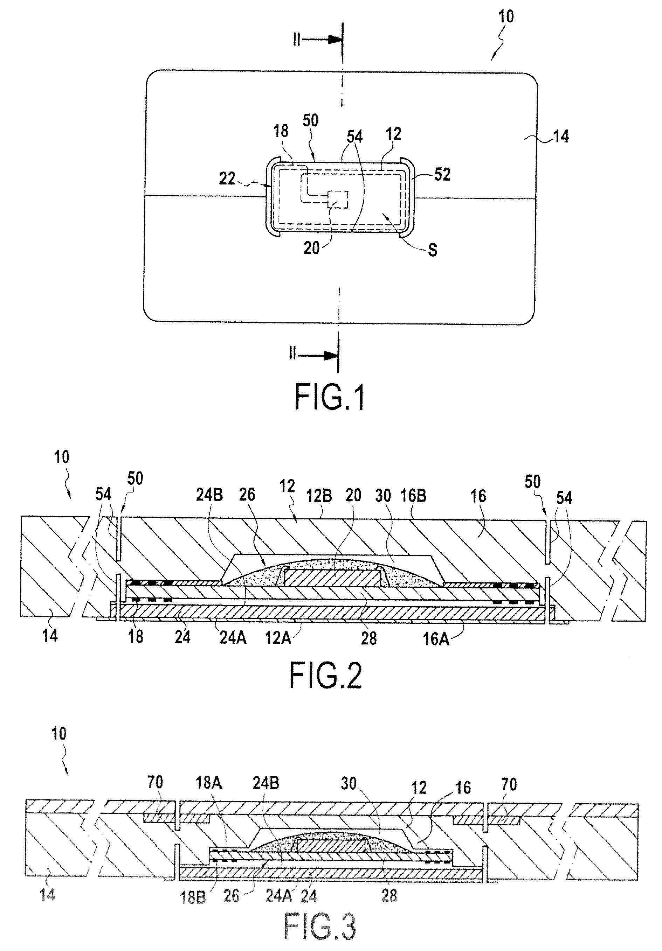

On a représenté sur **la** **figure 1** un ensemble comprenant un dispositif électronique selon un premier mode de réalisation de l'invention et un support portant le dispositif électronique. L'ensemble est désigné par la référence générale 10, le dispositif électronique est désigné par la référence 12 et le support par la référence 14.

Dans l'exemple décrit, le dispositif 12 est une étiquette électronique de type sans contact. Par exemple, l'étiquette 12 comprend un corps 16 avec une épaisseur sensiblement égale à 600 micromètres. Le corps 16 est par exemple réalisé dans une matière plastique telle que du PVC ou encore du PC (polycarbonate), du PE (Polyéthylène), etc. Ce corps 16 est de préférence réalisé par lamination de couches de matière plastique entre elles. Par exemple, le corps 16 est réalisé par lamination d'au moins deux couches réalisées dans une matière plastique, par exemple, et laminées entre elles. Dans ce premier mode de réalisation, le corps 16 est formé dans une seule couche en matière plastique.

L'étiquette 12 comprend, comme cela est illustré sur **la** **figure 2****,** une antenne de communication en champ proche 18 et un microcircuit 20 raccordé à l'antenne 18 (représentés en pointillé sur **la** **figure 1****).** Le microcircuit 20 et l'antenne 18 forment ensemble des moyens de communication en champ proche 22 aptes à communiquer avec un équipement externe tel qu'un lecteur spécialisé. Par exemple, les moyens de communication en champ proche 22 de l'étiquette 12 et le lecteur sont aptes à communiquer conformément au protocole de communication ISO 14443.

L'antenne 18 est formée par exemple par une pluralité de spires électriquement conductrices et délimitent une surface utile S de réception d'un champ magnétique. Par surface utile S, on entend au sens de l'invention, la surface de l'antenne 18 qui, traversée par un champ magnétique produit un courant induit circulant dans l'antenne 18. Cette surface utile S est dans cet exemple délimitée par le contour externe de l'antenne 18. En outre, dans cet exemple, l'antenne 18 est formée par deux parties 18A, 18B.

En outre, l'étiquette 12 comprend une couche de blindage magnétique 24 agencée pour s'étendre au moins partiellement en vis-à-vis de la surface S de l'antenne 18. Une telle couche 24 permet notamment de réduire les perturbations magnétiques générées par un environnement métallique situé à proximité de l'étiquette 12. La couche 24 est réalisée par exemple dans un matériau électriquement isolant et magnétiquement perméable tel que par exemple de la ferrite. L'épaisseur de la couche est comprise entre par exemple 100 et 300 micromètres et sa perméabilité relative est d'environ 100.

De préférence, la couche 24 a des dimensions légèrement supérieures à la surface S de l'antenne 18 et est agencée dans l'étiquette 18 pour la couvrir sur toute sa surface S.

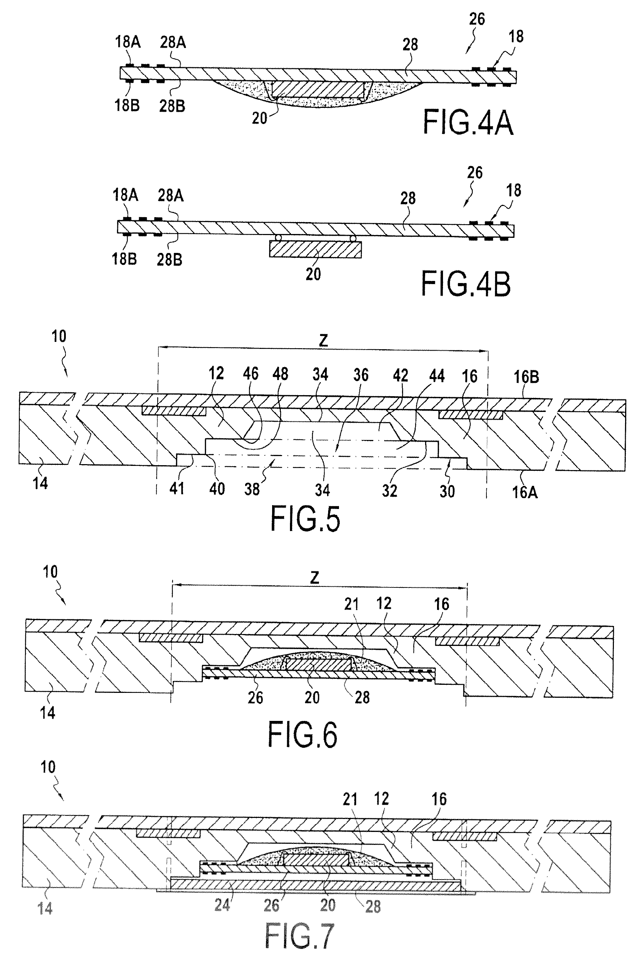

Plus particulièrement et conformément à l'invention, l'antenne 18 et le microcircuit 20 sont regroupés dans un même module 26 illustré en détail sur **la** **figure 4A** **ou la** **figure 4B****.** De préférence, ce module 26 comprend un support 28 portant le microcircuit 20 et l'antenne 18. Par exemple, le support 28 est délimité par des première 28A et deuxième 28B faces opposées, une des faces portant le microcircuit 20 et au moins une partie de l'antenne 18, l'antenne 18 pouvant se présenter en deux parties 18A, 18B s'étendant sur chacune des faces 28A, 28B du support 28 comme illustré sur la figure 2.

Dans l'exemple illustré sur **la** **figure 4A****,** le microcircuit 20 est assemblé au moyen de contacts filaires, le microcircuit 20 étant encapsulé dans une calotte 21 de résine polymère. Ce procédé est dit "wire bonding" conformément à la terminologie anglo-saxonne. Dans une variante illustrée par **la** **figure 4B****,** le microcircuit 20 est assemblé sur le support 28 au moyen d'un procédé de report de puce, le microcircuit 20 étant dans ce cas dit monté-retourné (de l'anglais « flip-chip »).

Plus précisément, l'étiquette 12 comprend une cavité ouverte 30 sur une des faces 16A, 16B du corps 16 de l'étiquette 12. Dans cette cavité 30, sont logés le module 26 et la couche de blindage 24 de manière à ce que la couche de blindage 24 ferme la cavité 30.

Ainsi, le module 26 est entièrement incorporé dans le corps 16 de l'étiquette 12 et ne peut pas être extrait sans ôter la couche de blindage 24 qui ferme cette cavité 30 et dissimule le module 26 dans le corps 16 de l'étiquette 12.

De préférence, la cavité 30 étant délimitée par une paroi périphérique 32 et un fond 34, la cavité 30 comprend une région centrale 36 de logement du module et une région périphérique 38 entourant la région centrale 36 de logement de la couche de blindage 24.

Comme cela est illustré sur **la** **figure 2****,** la région périphérique 38 est dimensionnée pour recevoir complètement la couche de blindage 24.

En outre, la paroi 32 comprend de préférence un gradin supérieur 40 séparant la région centrale 36 et la région périphérique 38 pour former un rebord supérieur 41 d'appui de la couche de blindage 24.

Dans l'exemple décrit, la région centrale 36 est elle-même formée de deux zones distinctes, une première zone centrale 42 de logement du microcircuit 20 et une deuxième zone périphérique 44 de logement du support 28 du module 26. La région centrale 36 comprend de préférence un gradin inférieur 46 pour former un rebord inférieur 48 d'appui du support 28 du module 26 portant le microcircuit 20 et l'antenne 18. Ainsi, le gradin inférieur 46 délimite avec le fond 34 de la cavité 30 une région profonde 42 de logement du microcircuit 20.

De préférence, comme cela est illustré sur **les** **figures 1 et 2****,** l'étiquette 12 de type sans contact forme une plaquette détachable du support 14 pour étiquette sans contact. Dans l'exemple décrit, le support 12 est réalisé dans une matière plastique identique à celle formant le corps 16 de l'étiquette 12, l'étiquette 12 et le support 14 étant venus de matière. Par exemple, le support 14 est réalisé par lamination d'au moins deux couches réalisées dans une matière plastique, par exemple, et laminées entre elles.

Dans un mode de réalisation préféré de l'invention (illustré sur **la** **figure 1**), le support 14 délimite des dimensions extérieures conformes à un format normalisé de carte à microcircuit par exemple le format ID-1 de la norme ISO 7816. Toutefois, de préférence, la carte a une épaisseur inférieure à l'épaisseur de 800 micromètres conforme à la norme ISO 7816. En variante, l'épaisseur peut être d'environ 600 micromètres.

Par exemple, la plaquette formant l'étiquette 12 est délimitée par une ligne fracturable 50, ménagée dans le support 14 et prévue pour permettre une séparation de la plaquette 12 et du support 14 par simple pression manuelle le long de cette ligne 50. Par exemple, la ligne 50 comprend des incisions traversantes 52 et/ou des incisions non traversantes 54. Dans l'exemple illustré, la plaquette 12 a une forme générale sensiblement rectangulaire et des incisions traversantes 52 sont formées le long des petits bords latéraux et des incisions non traversantes 54 sont formées le long des grands bords latéraux du rectangle formant la plaquette.

Dans le mode de réalisation de l'invention, l'étiquette 12 a par exemple pour dimensions environ 15 mm x 30 mm, éventuellement 30 mm x 20 mm.

Dans l'exemple illustré et de façon préférentielle, la région périphérique 38 de la cavité 30 s'étend au moins à travers toute la plaquette 12, par exemple en dépassant de part et d'autre de la périphérie de la plaquette 12. Ainsi, la ligne fracturable 50 s'étend en partie sur la couche de blindage 24 et cette ligne 50 comprend au moins une incision traversant l'épaisseur de la couche de blindage 24.

En outre, de préférence, la couche de blindage 24 comprend une première face 24A destinée à être orientée vers l'extérieur de la cavité 30, un premier revêtement adhésif pour permettre de rapporter la plaquette détachable sur une surface d'un équipement externe par collage, affleure la surface du support. De préférence, ce premier revêtement adhésif est muni d'un film non adhésif retirable pour faciliter la manipulation du dispositif et éviter l'accumulation de poussières ou particules sur le revêtement adhésif.

Par ailleurs, la couche de blindage 24 comprend une deuxième face 24B destinée à être orientée vers l'intérieur de la cavité 30. Cette face 24B comprend par exemple un deuxième revêtement adhésif de manière à ce que la couche 24 puisse être rapportée par collage dans la cavité 30.

La plaquette, une fois détachée, forme une étiquette électronique sans contact 12 présentant une face de lecture 12B à partir de laquelle les données peuvent être échangées entre les moyens de communication à champ proche et un lecteur externe et une face de blindage 12A apte à limiter toutes les interférences susceptibles d'être générées par un objet sur lequel l'étiquette est apposée.

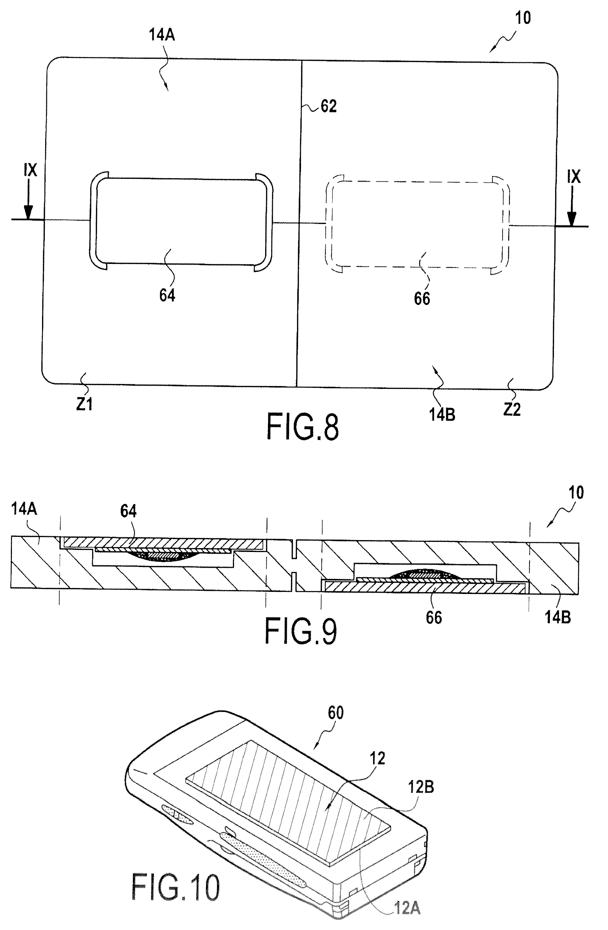

Par exemple, la plaquette détachable ou l'étiquette électronique de type sans contact incorpore une fonction électronique de paiement sans contact et est destinée à être rapportée par collage sur un terminal de téléphonie mobile 60, comme cela est illustré sur **la** **figure 10****.** On voit notamment sur cette figure que l'étiquette 12 est collée sur le dos de ce téléphone.

On a représenté également sur **les** **figures 8 et 9** un autre mode de réalisation du support d'étiquette dans lequel on peut placer deux étiquettes de type sans contact.

Le support 14 comprend un corps de carte avec au moins les première 64 et deuxième 66 étiquettes électroniques. Les étiquettes comprennent respectivement des premier et deuxième ensembles transpondeur susceptibles d'être activés par l'application d'un champ magnétique.

De préférence, ces étiquettes électroniques sont disposées l'une à côté de l'autre selon une direction longitudinale du corps de carte et en vis-à-vis l'une de l'autre. Dans ce cas, le support est muni d'une ligne de fragilisation 62 séparant deux zones Z1, Z2 portant chacune une des étiquettes électroniques 64, 66. Cette ligne de fragilisation comprend par exemple deux incisions non traversantes à profil en "U" et réalisée sur chaque face du support de carte en regard l'une de l'autre. Les étiquettes sont par ailleurs disposées en regard l'une de l'autre et des cavités sont formées sur chacune des faces opposées de manière à ce que les étiquettes soient disposées selon des orientations opposées.

Cette disposition en face à face des étiquettes présente en outre l'avantage d'éviter que l'application d'un champ magnétique sur l'une des faces du support ne provoque l'activation des deux ensembles transpondeurs, notamment dans le cas d'une personnalisation.

On a représenté sur **la** **figure 3** un deuxième mode de réalisation du dispositif de l'invention. Sur cette figure, les éléments analogues sont désignés par des références identiques.

Dans ce deuxième mode de réalisation, l'étiquette 12 comprend en outre un anneau électriquement conducteur 70 formant un moyen d'amplification du gain de l'antenne 18 qui s'étend autour d'un contour externe de l'antenne 18 dans le même plan que cette dernière ou, comme cela est illustré sur **la** **figure 3****,** dans un plan parallèle au plan contenant au moins une partie de l'antenne 18A ou 18B.

Ainsi, l'anneau 70 est par exemple formé par un dépôt d'encre électriquement conductrice sur une face d'une des couches formant le corps 16 de l'étiquette 12. De préférence, dans ce cas, le corps 16 de l'étiquette 12 est formé par au moins deux couches en matière plastique. En outre, dans ce cas, l'anneau 70 est de préférence disposé à cheval sur la ligne fracturable 50 délimitant le contour externe de la plaquette de manière à ce que la largeur de l'anneau soit maximisée en s'étendant au plus près du contour externe de la plaquette détachable.

On va maintenant décrire en référence **aux** **figures 5 à 7** les principales étapes d'un procédé de fabrication de l'ensemble 10 selon le deuxième mode de réalisation de l'invention.

Dans un premier temps, on forme le corps de carte formant support de l'étiquette, par exemple par lamination d'une pluralité de couches entre elles. Par exemple, on lamine au moins deux couches de manière à obtenir un corps de carte d'épaisseur inférieure ou égale à 600 micromètres. En outre, comme cela est illustré sur **la** **figure 5****,** de préférence, on dépose un anneau d'encre électriquement conductrice 70 sur une des faces d'une des couches de manière à ce que cet anneau puisse entourer le module une fois que ce dernier sera logé dans l'étiquette.

Puis le procédé comprend une étape d'usinage d'une cavité dans le corps de carte 20. De préférence, au préalable, on prédéfinit un emplacement Z de la plaquette détachable 12 et on usine la cavité 30 dans cet emplacement Z.

Une telle cavité 30 est généralement obtenue par usinage, typiquement par fraisage ou lamage en trois opérations exécutées en continu :
- un grand lamage pour former la région périphérique 38,
- un lamage intermédiaire pour former la région intermédiaire 44,
- un petit lamage pour former la région centrale plus profonde 42.

Ainsi, la cavité est réalisée en une seule opération de lamage, l'outil de lamage se déplaçant pour former les différents gradins.

Puis, le procédé comprend une étape de logement du module 30 dans la cavité 36 **(****figure 5****)** de manière à ce que le support 28 du module 26 prenne appui sur le rebord interne périphérique 48 entourant la région profonde 42, et une étape de logement de la couche de blindage magnétique 24 à l'intérieur de la cavité 30 comme cela est illustré sur **la** **figure 6** **:** de préférence, cette couche de blindage 24 est rapportée par collage à l'intérieur de la cavité 30. En outre, la couche de blindage 24 comprend sur la face opposée à la face collée au fond de la cavité le revêtement adhésif muni d'un film antiadhésif retirable.

Enfin, le procédé comprend une étape de pré-découpage de la plaquette selon les limites prédéfinies par l'emplacement Z pour former la plaquette détachable du support de carte comme cela est illustré par **la** **figure 7****.** Dans le mode de réalisation préféré de l'invention, cette étape de pré-découpage consiste en la formation d'une ligne fracturable 50 permettant la séparation de la plaquette et du corps par simple pression manuelle.

Grâce à l'invention, du fait que la couche de blindage 24 est incorporée dans un support et que l'ensemble transpondeur est également incorporé dans la même cavité que la couche de blindage, l'épaisseur du support peut être relativement réduite.

## Revendications

1. Dispositif électronique sans contact (12) comprenant une antenne (18) de communication en champ proche, un microcircuit (20) raccordé à l'antenne (18) et une couche de blindage magnétique (24) agencée pour s'étendre sensiblement en vis-à-vis de l'antenne (18), dispositif dans lequel l'antenne (18) et le microcircuit (20) sont regroupés dans un module (26) et le dispositif (12) comprend un corps (16) comprenant une cavité ouverte (30) sur l'une de ses faces, **caractérisé en ce que** le module (26) et la couche de blindage (24) sont logés dans ladite cavité de manière à ce que la couche de blindage (24) ferme la cavité (30).

2. Dispositif (12) selon la revendication précédente, dans lequel la cavité (30) comprend une région profonde centrale (36) de logement du module (26) et une région périphérique surélevée (38) entourant la région centrale (36) de logement de la couche de blindage (24).

3. Dispositif (12) selon la revendication précédente, dans lequel, la cavité (30) étant munie d'une paroi périphérique (32) et d'un fond (34), la paroi (32) comprend un gradin supérieur (38), séparant la région centrale (36) et la région périphérique (38), pour former un rebord supérieur (41) d'appui de la couche de blindage (24).

4. Dispositif (12) selon la revendication 2 ou 3, dans lequel, la cavité (30) étant munie d'une paroi périphérique (32) et d'un fond (34), la paroi comprend, dans la région centrale, un gradin inférieur (46), séparant une première zone de logement (42) du microcircuit (20) et une deuxième zone de logement (44) d'un support (28) de module (26) portant le microcircuit (20) et l'antenne (18), pour former un rebord inférieur (48) d'appui du support (28) de module (26).

5. Dispositif (12) selon l'une quelconque des revendications précédentes, dans lequel le module comprend un support portant le microcircuit (20) et l'antenne (18).

6. Dispositif (12) selon l'une quelconque des revendications précédentes, dans lequel le corps comprend un anneau électriquement conducteur (70) entourant sensiblement un contour externe de l'antenne (18) et s'étendant dans un plan parallèle à un plan comprenant l'antenne (18) ou dans un même plan.

7. Dispositif (12) selon l'une quelconque des revendications précédentes, étant une étiquette de type sans contact.

8. Support (14) pour une étiquette de type sans contact (12), comprenant un corps en forme générale de plaque et une plaquette détachable (12) formant l'étiquette, l'étiquette (12) étant un dispositif selon l'une quelconque des revendications précédentes, la cavité s'étendant à l'intérieur de la plaquette.

9. Support (12) selon la revendication précédente, dans lequel la plaquette détachable (12) est délimitée par une ligne fracturable (50) ménagée dans le support (14) et prévue pour permettre une séparation de la plaquette (12) et du support (14) par simple pression manuelle.

10. Support (14) selon la revendication précédente, dans lequel la ligne fracturable (50) comprend des incisions traversantes (52) et/ou des incisions non traversantes (54).

11. Support (14) selon l'une quelconque des revendications 8 à 10, le corps du support (12) comprenant deux plaquettes détachables (12A, 12B) formant des première et deuxième étiquettes disposées l'une à côté de l'autre, selon une direction longitudinale du support (14), et en regard l'une de l'autre.

12. Procédé de fabrication d'un dispositif électronique (12) comprenant une antenne de communication en champ proche (18) et un microcircuit (20) raccordé à l'antenne (18) et une couche de blindage magnétique (24) s'étendant sensiblement vis-à-vis de l'antenne (18), le procédé comprenant la formation d'une cavité (30) dimensionnée pour recevoir le module (26) et la couche de blindage (24), la cavité (30) comprenant une région centrale profonde de logement du module (26) et une zone périphérique entourant la région centrale profonde de logement de la couche de blindage (24).

13. Procédé selon la revendication précédente, dans lequel la région centrale (36) comprend une première zone centrale (42) munie d'un fond (34) pour le logement du microcircuit (20) et une deuxième zone périphérique (44) surélevée par rapport à la première zone centrale (42) délimitant un gradin (46) avec le fond (34) pour le logement d'un support (28) du module (26) portant l'antenne (18) et le microcircuit (20).

14. Procédé selon l'une ou l'autre des revendications 12 ou 13, dans lequel la cavité (30) comprend trois étages correspondant respectivement à une première région périphérique de logement (38) de la couche de blindage (24), à une deuxième région intermédiaire (44) de logement d'un support (28) du module (26) portant l'antenne (18) et le microcircuit (20) et à une troisième région centrale (46) de logement du microcircuit (20).

## Patentansprüche

1. Kontaktlose elektronische Vorrichtung (12), umfassend eine Antenne (18) zur Nahfeldkommunikation, einen Mikroschaltkreis (20), der mit der Antenne (18) verbunden ist, und eine magnetische Abschirmungsschicht (24), die dazu eingerichtet ist, sich im Wesentlichen gegenüber der Antenne (18) zu erstrecken, Vorrichtung, bei der die Antenne (18) und der Mikroschaltkreis (20) in einem Modul (26) zusammengefasst sind und die Vorrichtung (12) einen Körper (16) umfasst, der eine auf einer ihrer Seiten offene Vertiefung (30) aufweist, **dadurch gekennzeichnet, dass** das Modul (26) und die Abschirmungsschicht (24) in der Vertiefung derart aufgenommen sind, dass die Abschirmungsschicht (24) die Vertiefung (30) verschließt.

2. Vorrichtung (12) nach dem vorhergehenden Anspruch, bei der die Vertiefung (30) einen tiefen, mittleren Bereich (36) zur Aufnahme des Moduls (26) und einen den mittleren Bereich (36) umgebenden erhöhten Umfangsbereich (38) zur Aufnahme der Abschirmungsschicht (24) umfasst.

3. Vorrichtung (12) nach dem vorhergehenden Anspruch, bei der, da die Vertiefung (30) mit einer Umfangswand (32) und einem Grund (34) versehen ist, die Wand (32) eine obere Stufe (38) umfasst, die den mittleren Bereich (36) und den Umfangsbereich (38) trennt, um einen oberen Rand (41) zur Auflage der Abschirmungsschicht (24) zu bilden.

4. Vorrichtung (12) nach Anspruch 2 oder 3, bei der, da die Vertiefung (30) mit einer Umfangswand (32) und einem Grund (34) versehen ist, die Wand in dem mittleren Bereich eine untere Stufe (46) umfasst, die einen ersten Bereich zur Aufnahme (42) des Mikroschaltkreises (20) und einen zweiten Bereich zur Aufnahme (44) eines den Mikroschaltkreis (20) und die Antenne (18) tragenden Trägers (28) des Moduls (26) trennt, um einen unteren Rand (48) zur Auflage des Trägers (28) des Moduls (26) zu bilden.

5. Vorrichtung (12) nach einem der vorhergehenden Ansprüche, bei der das Modul einen den Mikroschaltkreis (20) und die Antenne (18) tragenden Träger umfasst.

6. Vorrichtung (12) nach einem der vorhergehenden Ansprüche, bei der der Körper einen elektrisch leitenden Ring (70) umfasst, der eine Außenkontur der Antenne (18) im Wesentlichen umgibt und der sich in einer Ebene parallel zu einer die Antenne (18) umfassenden Ebene oder in einer gleichen Ebene erstreckt.

7. Vorrichtung (12) nach einem der vorhergehenden Ansprüche, wobei sie ein Etikett vom kontaktlosen Typ ist.

8. Träger (14) für ein Etikett vom kontaktlosen Typ (12), umfassend einen allgemein plattenförmigen Körper und ein das Etikett bildendes ablösbares Plättchen (12), wobei das Etikett (12) eine Vorrichtung nach einem der vorhergehenden Ansprüche ist, wobei die Vertiefung sich innerhalb des Plättchens erstreckt.

9. Träger (12) nach dem vorhergehenden Anspruch, bei dem das ablösbare Plättchen (12) durch eine aufbrechbare Linie (50) begrenzt ist, die in dem Träger (14) ausgebildet und dazu vorgesehen ist, ein Trennen des Plättchens (12) und des Trägers (14) durch einfaches Drücken mit der Hand zu ermöglichen.

10. Träger (14) nach dem vorhergehenden Anspruch, bei dem die aufbrechbare Linie (50) durchgehende Einschnitte (52) und/oder nicht durchgehende Einschnitte (54) umfasst.

11. Träger (14) nach einem der Ansprüche 8 bis 10, wobei der Körper des Trägers (12) zwei ablösbare Plättchen (12A, 12B) umfasst, die ein erstes und ein zweites Etikett bilden, welche in einer Längsrichtung des Trägers (14) nebeneinander und einander gegenüber angeordnet sind.

12. Verfahren zur Herstellung einer elektronischen Vorrichtung (12), die eine Antenne zur Nahfeldkommunikation (18) und einen mit der Antenne (18) verbundenen Mikroschaltkreis (20) und eine magnetische Abschirmungsschicht (24), die sich im Wesentlichen gegenüber der Antenne (18) erstreckt, umfasst, wobei das Verfahren die Ausbildung einer Vertiefung (30) umfasst, die dimensioniert ist, um das Modul (26) und die Abschirmungsschicht (24) aufzunehmen, wobei die Vertiefung (30) einen tiefen, mittleren Bereich zur Aufnahme des Moduls (26) und einen den tiefen, mittleren Bereich umgebenden Umfangsbereich zur Aufnahme der Abschirmungsschicht (24) umfasst.

13. Verfahren nach dem vorhergehenden Anspruch, bei dem der mittlere Bereich (36) einen ersten mittleren Bereich (42), welcher mit einem Grund (34) zur Aufnahme des Mikroschaltkreises (20) ausgestattet ist, und einen gegenüber dem ersten mittleren Bereich (42) erhöhten zweiten Umfangsbereich (44) umfasst, der mit dem Grund (34) eine Stufe (46) für die Aufnahme eines Trägers (28) des Moduls (26), welcher die Antenne (18) und den Mikroschaltkreis (20) trägt, begrenzt.

14. Verfahren nach dem einen oder dem anderen der Ansprüche 12 oder 13, bei dem die Vertiefung (30) drei Stufen umfasst, die einem ersten Umfangsbereich zur Aufnahme (38) der Abschirmungsschicht (24), einem zweiten Zwischenbereich (44) zur Aufnahme eines die Antenne (18) und den Mikroschaltkreis (20) tragenden Trägers (28) des Moduls (26) bzw. einem dritten mittleren Bereich (46) zur Aufnahme des Mikroschaltkreises (20) entsprechen.

## Claims

1. Contactless electronic device (12) comprising a near-field communication antenna (18), a microcircuit (20) connected to the antenna (18) and a magnetic shielding layer (24) arranged so as to extend substantially facing the antenna (18), device wherein the antenna (18) and the microcircuit (20) are combined into a module (26) and the device (12) comprises a body (16) comprising an open cavity (30) on one of its faces, **characterized in that** the module (26) and the shielding layer (24) are housed into said cavity so that the shielding layer (24) closes off the cavity (30).

2. Device (12) according to the foregoing claim, in which the cavity (30) comprises a deep central area (36) for housing the module (26) and a raised peripheral area (38) surrounding the central area (36) for housing the shielding layer (24).

3. Device (12) according to the foregoing claim, in which, the cavity (30) being provided with a peripheral wall (32) and a bottom (34), the wall (32) comprises an upper step (38), separating the central area (36) and the peripheral area (38), to form an upper edge (41) supporting the shielding layer (24).

4. Device (12) according to Claim 2 or 3, in which, the cavity (30) being provided with a peripheral wall (32) and a bottom (34), the wall comprises, in the central area, a lower step (46), separating a first area (42) for housing the microcircuit (20) and a second area (44) for housing a module (26) substrate (28) bearing the microcircuit (20) and the antenna (18), to form a lower edge (48) supporting the module (26) substrate (28).

5. Device (12) according to any one of the foregoing claims, in which the module comprises a substrate bearing the microcircuit (20) and the antenna (18).

6. Device (12) according to any one of the foregoing claims, wherein the body includes an electrically conductive ring (70) substantially surrounding an outside perimeter of the antenna (18) and extending within a plane parallel to a plane containing the antenna (18) or in the same plane.

7. Device (12) according to any one of the foregoing claims, being a contactless type tag.

8. Substrate (14) for a contactless type tag (12), comprising a body in the general shape of a plate and a small detachable plate (12) constituting the tag, the tag (12) being a device according to any one of the foregoing claims, the cavity extending into the small plate.

9. Substrate (12) according to the foregoing claim, wherein the small detachable plate (12) is delimited by a breakable line (50) provided in the substrate (14) and designed to allow separation of the small plate (12) from the substrate (14) by manual pressure alone.

10. Substrate (14) according to the foregoing claim, in which the breakable line (50) comprises through perforations (52) and/or blind perforations (54).

11. Substrate (14) according to any one of claims 8 to 10, the body of the substrate (12) including two small detachable plates (12A, 12B) constituting the first and second tags arranged side by side along a longitudinal direction of the substrate (14), and facing each other.

12. Method for manufacturing an electronic device (12) comprising a near-field communication antenna (18) and a microcircuit (20) connected to the antenna (18) and a magnetic shielding layer (24) extending substantially facing the antenna (18), the method comprising the formation of a cavity (30), sized to receive the module (26) and the shielding layer (24), the cavity (30) comprising a deep central area for housing the module (26) and a peripheral area surrounding the central area for housing the shielding layer (24).

13. Method according to the foregoing claim, wherein the central area (36) comprises a first central area (42) provided with a bottom (34) for housing the microcircuit (20) and a second peripheral area (44), raised with respect to the first central area (42) delimiting a step (46) with the bottom (34) for housing a substrate (28) of the module (26) bearing the antenna (18) and the microcircuit (20).

14. Method according to either claim 12 or claim 13, wherein the cavity (30) comprises three levels corresponding respectively to a first peripheral area (38) for housing the shielding layer (24), to a second intermediate area (44) for housing a module (26) substrate (28) bearing the antenna (18) and the microcircuit (20) and to a third central area (46) for housing the microcircuit (20).
